# EUROPEAN PATENT APPLICATION

(11) **EP 4 807 820 A1**
(43) Date of publication of application: **16.09.2026**
(21) Application number: 25210616.6
(22) Date of filing: 23.10.2025
(51) Int. Cl.: H01M 4/70, H01M 50/103, H01M 50/503, H01M 50/533, H01M 50/538

(54) **SECONDARY BATTERY AND METHOD OF MANUFACTURING THE SAME**

(30) Priority: 11.03.2025 KR 20250031433
(71) Applicant: SAMSUNG SDI CO., LTD., Yongin-si, Gyeonggi-do 17084 (KR)
(72) Inventor: Yoo, Seung Yeol, 16678 Gyeonggi-do, Suwon-si (KR)
(74) Representative: Meissner Bolte Partnerschaft mbB

(57) **Abstract**

The present invention relates to a secondary battery and a method of manufacturing the same, and is directed to providing a secondary battery capable of being manufactured by only bending after welding, for high assembly efficiency, and having a wide welding area allowing all tabs to be welded to a connection member, for improved heat dissipation performance due to reduced resistance, and a method of manufacturing the same. To this end, the present invention provides a secondary battery including a case (100); an electrode assembly (200) disposed inside the case (100) and including a first electrode (210) and a second electrode (220); a first tab member (310) connected to the first electrode (210)and extending from the electrode assembly (200); a cap assembly (400) disposed to face the electrode assembly (200) and including a first terminal (420) and a second terminal (430); a first connection member (500) that electrically connects the first terminal (420) of the cap assembly (400) to the first tab member (310); and a first connection hole (312) formed in the first tab member (310) so that the first connection member (500) is inserted into the first connection hole (312).

## Description

### BACKGROUND

### 1. Field of the Invention

The present invention relates to a secondary battery and a method of manufacturing the same.

### 2. Discussion of Related Art

Generally, with the recent rapid proliferation of electronic devices using batteries such as mobile phones, laptop computers, and electric vehicles, the demand for secondary batteries with high energy density and high capacity has been rapidly increasing. Accordingly, research and development for improving the performance of lithium secondary batteries are actively being conducted.

A lithium secondary battery is a battery including a positive electrode and a negative electrode including an active material capable of lithium ion intercalation and deintercalation, and an electrolyte, and produces electric energy through oxidation and reduction reactions when lithium ions are intercalated or deintercalated from the positive electrode and the negative electrode.

The above information disclosed in this Background section is provided for enhancement of understanding of the background of the present invention, and, therefore, it may contain information that does not constitute related or prior art.

### SUMMARY OF THE INVENTION

The present invention is directed to providing a secondary battery capable of being manufactured by only bending after welding, for high assembly efficiency, and having a wide welding area allowing all tabs to be welded to a connection member, for improved heat dissipation performance due to reduced resistance, and a method of manufacturing the same.

These and other aspects and features of the present invention will be described in or will be apparent from the following description of some embodiments of the present invention.

According to the present invention, there is a secondary battery including a case, an electrode assembly disposed inside the case and including a first electrode and a second electrode, a first tab member connected to the first electrode and extending from the electrode assembly, a cap assembly disposed to face the electrode assembly and including a first terminal and a second terminal, a first connection member configured to electrically connect the first terminal of the cap assembly to the first tab member, and a first connection hole formed in the first tab member so that the first connection member is inserted into the first connection hole.

The first tab members may be disposed as a pair to be spaced apart from each other on one side with respect to a center of the first electrode.

The first tab member may be formed on one side with respect to the center of the first electrode, and a plurality of first connection holes may be formed in the first tab member.

The first connection member may include a first portion disposed on one side with respect to a center of the first connection member and electrically connected to the first terminal, and a second portion disposed on the other side with respect to the center of the first connection member and inserted into the first connection hole, and the first connection member may be bent with respect to the center of the first connection member so that the first portion is folded over the second portion.

The second portion may be welded to the first tab member in a state in which the second portion is inserted into the first connection hole.

The first tab member may be compacted in a state in which the second portion is inserted into the first connection hole.

The first connection hole may be filled with a conductive bond in a state in which the second portion is inserted into the first connection hole.

The first portion may be formed to be bent in a vertical direction from the second portion.

The secondary battery may further include an auxiliary tab on the first tab member to reinforce the rigidity of a welding portion.

An upper surface of the auxiliary tab may be coated with a conductive bond.

The secondary battery may further include a withdrawal prevention portion configured to prevent the first connection member from being withdrawn from the first connection hole.

The withdrawal prevention portion may be a hook formed at an end of the first connection member and engaged with the auxiliary tab.

The first connection member may include a plurality of thin tabs.

The secondary battery may include a second tab member connected to the second electrode and spaced apart from the first tab member, a second connection member electrically connecting the second terminal of the cap assembly to the second tab member, and a second connection hole formed in the second tab member so that the second connection member is inserted into the second connection hole.

According to the present invention, there is a method of manufacturing a secondary battery, including a connection hole forming operation of forming a connection hole in a tab member extending from an electrode assembly, a connection operation of inserting a connection member connected to a terminal of a cap assembly into the connection hole, a welding operation of welding the connection member and the tab member to electrically connect the terminal to the tab member in a state in which the connection member is inserted into the connection hole, and a bending operation of bending a center of the connection member so that the cap assembly is positioned above the tab member.

The connection operation may include filling the connection hole with a conductive bond in a state in which the connection member is inserted into the connection hole.

The connection operation may further include compacting the tab member in a state in which the connection member is inserted into the connection hole.

The welding operation may include providing an auxiliary tab on the tab member and welding the upper side of the auxiliary tab to weld the auxiliary tab, the tab member, and the connection member.

The method of manufacturing a secondary battery may further include coating an upper surface of the auxiliary tab with a conductive bond after the welding.

In the bending operation, a first portion bent with respect to a center of the tab member and connected to the terminal is folded over a second portion inserted into the connection hole.

### BRIEF DESCRIPTION OF THE DRAWINGS

The drawings attached to this specification illustrate some embodiments of the present invention, and further describe aspects and features of the present invention together with the detailed description of the present invention. However, the present invention should not be construed as being limited to the drawings:
FIG. 1 is a perspective view schematically illustrating a configuration of a secondary battery according to a first embodiment of the present invention;
FIG. 2 is an exploded perspective view schematically illustrating the configuration of the secondary battery according to the first embodiment of the present invention;
FIG. 3 is a cross-sectional view schematically illustrating the configuration of the secondary battery according to the first embodiment of the present invention;
FIG. 4 is a diagram schematically illustrating a configuration of an electrode assembly according to the first embodiment of the present invention;
FIG. 5 is an enlarged view schematically illustrating a configuration of a cap assembly according to the first embodiment of the present invention;
FIG. 6 is a front view schematically illustrating a tab member of an electrode assembly according to the first embodiment of the present invention;
FIG. 7 illustrates a first modified example schematically showing a tab member according to a first embodiment of the present invention;
FIG. 8 illustrates a second modified example schematically showing the tab member according to a first embodiment of the present invention;
FIG. 9 illustrates a third modified example schematically showing the tab member according to the first embodiment of the present invention;
FIG. 10 is a diagram illustrating a connection between a first connection member and a first tab member according to the first embodiment of the present invention;
FIG. 11 illustrates a first modified example schematically showing a connection between the first connection member and the first tab member according to the first embodiment of the present invention;
FIG. 12 illustrates a second modified example schematically showing the connection between the first connection member and the first tab member according to the first embodiment of the present invention;
FIG. 13 is a diagram schematically illustrating a process of forming the secondary battery according to the first embodiment of the present invention;
FIG. 14 is a diagram schematically illustrating a completed state of the secondary battery according to the first embodiment of the present invention;
FIG. 15 illustrates a first modified example schematically showing the first connection member according to the first embodiment of the present invention;
FIG. 16 illustrates a second modified example schematically showing the first connection member according to the first embodiment of the present invention;
FIG. 17 is a diagram schematically illustrating a process of forming a secondary battery according to a second embodiment of the present invention;
FIG. 18 is a diagram schematically illustrating a completed state of the secondary battery according to the second embodiment of the present invention;
FIG. 19 illustrates a modified example showing a connection between a first connection member and a first tab member according to the second embodiment of the present invention;
FIG. 20 is a diagram schematically illustrating a process of forming a secondary battery according to a third embodiment of the present invention;
FIG. 21 is a diagram schematically illustrating a completed state of the secondary battery according to the third embodiment of the present invention; and
FIG. 22 is a flowchart illustrating a method of manufacturing a secondary battery according to an embodiment of the present invention.

### DETAILED DESCRIPTION OF EXEMPLARY EMBODIMENTS

Herein, some embodiments of the present invention will be described, in further detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

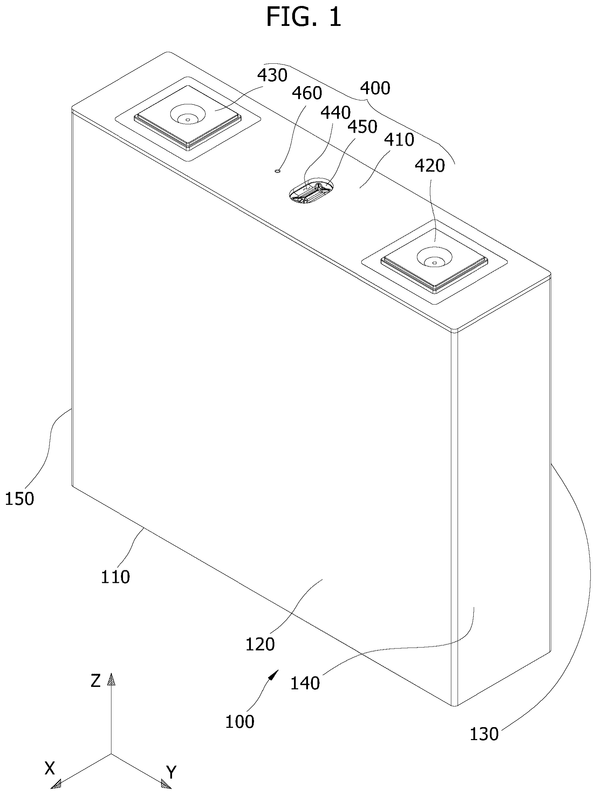

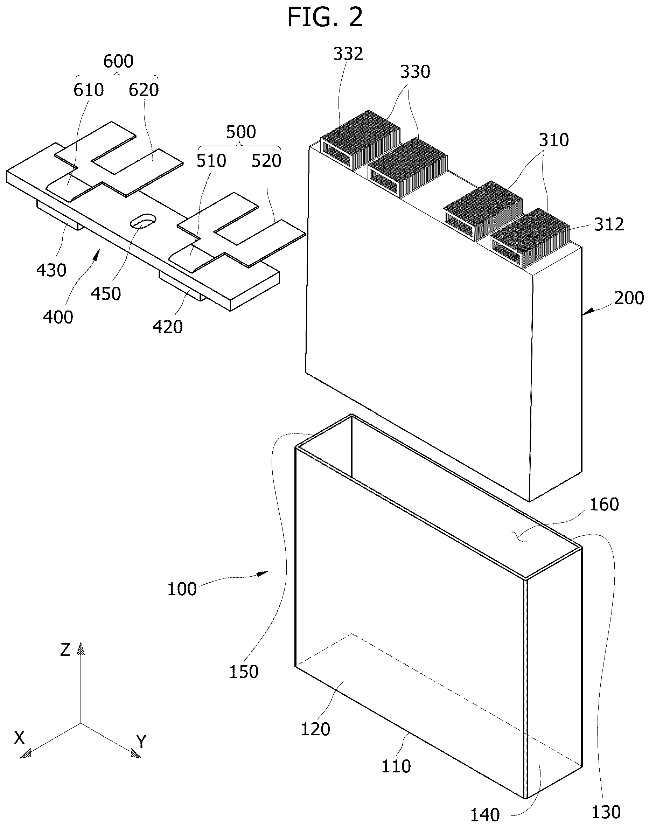

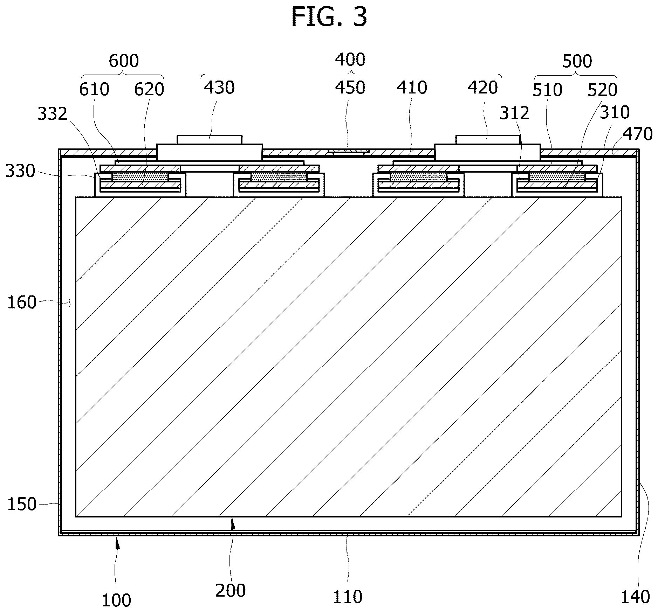

FIG. 1 is a perspective view schematically illustrating a configuration of a secondary battery according to a first embodiment of the present invention, FIG. 2 is an exploded perspective view schematically illustrating a configuration of the secondary battery according to the first embodiment of the present invention, and FIG. 3 is a cross-sectional view schematically illustrating the configuration of the secondary battery according to the first embodiment of the present invention.

Hereinafter, an example in which the secondary battery is a prismatic lithium ion secondary battery will be described. However, the present invention is not limited thereto, and the secondary battery may be a lithium polymer battery or a cylindrical battery.

Referring to FIGS. 1 to 3, the secondary battery includes a case 100, an electrode assembly 200, a first tab member 310, a cap assembly 400, and a first connection member 500.

The case 100 forms a rough exterior of the secondary battery and may accommodate the electrode assembly 200.

The case 100 according to the present embodiment may include a bottom portion 110, a front surface portion 120, a rear surface portion 130, a first side portion 140, and a second side portion 150.

The bottom portion 110 may form an exterior of the lower side (in FIG. 3) of the case 100. The bottom portion 110 according to the present embodiment may have the shape of a rectangular plate.

The front surface portion 120, the rear surface portion 130, the first side portion 140, and the second side portion 150 can form the exterior of a circumference of the case 100.

The front surface portion 120, the rear surface portion 130, the first side portion 140, and the second side portion 150 according to the present embodiment may have the shape of a plate extending upward (in FIG. 2) from an edge of the bottom portion 110. The front surface portion 120, the rear surface portion 130, the first side portion 140, and the second side portion 150 may be disposed to surround a space on the upper side of the bottom portion 110. The front surface portion 120, the rear surface portion 130, the first side portion 140, and the second side portion 150 may be disposed to form a rectangular cross-sectional shape.

The front surface portion 120 and the rear surface portion 130 may be disposed to face each other in a longitudinal direction. The front surface portion 120 and the rear surface portion 130 may be disposed parallel to each other. Areas of the front surface portion 120 and the rear surface portion 130 may be the same.

The first side portion 140 and the second side portion 150 may be disposed to face each other in a lateral direction. The first side portion 140 and the second side portion 150 may be disposed parallel to each other. Areas of the first side portion 140 and the second side portion 150 may be the same. The areas of the first side portion 140 and the second side portion 150 may be smaller than those of the front surface portion 120 and the rear surface portion 130.

The case 100 may further include an opening portion 160. The opening portion 160 according to the present embodiment may be a space surrounded by upper ends of the front surface portion 120, the rear surface portion 130, the first side portion 140, and the second side portion 150. The opening portion 160 may connect an internal space and an external space of the case 100.

Accordingly, the case 100 according to the present embodiment may have the shape of a cuboid with an open upper side.

A first direction to be described below may be a direction that is parallel to a Z-axis in FIGS. 2 and 3 and is directed from the bottom portion 110 to the opening portion 160. A second direction may be a direction that is parallel to a Y-axis in FIGS. 2 and 3 and is directed from the first side portion 140 to the second side portion 150. A third direction may be a direction that is parallel to an X-axis in FIGS. 2 and 3 and is directed from the front surface portion 120 to the rear surface portion 130.

The electrode assembly 200 may function as a unit structure that performs power charging and discharging operations in the secondary battery. The electrode assembly 200 may be accommodated inside the case 100.

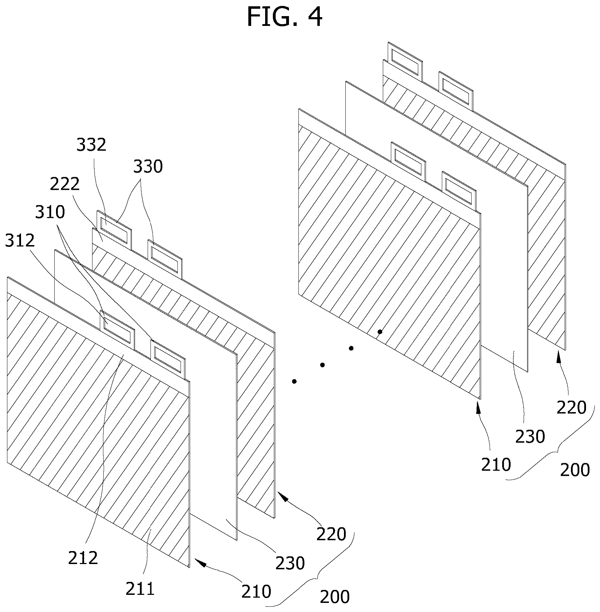

FIG. 4 is a diagram schematically illustrating a configuration of the electrode assembly according to an embodiment of the present invention.

Referring to FIGS. 1 to 4, the electrode assembly 200 according to the present embodiment may include a first electrode 210, a second electrode 220, and a separator 230 disposed between the first electrode 210 and the second electrode 220. A plurality of first electrodes 210, a plurality of separators 230, and plurality of second electrodes 220 may be included.

Hereinafter, an example in which the electrode assembly 200 has a stacked form in which a plurality of first electrodes 210, separators 230, and second electrodes 220 are sequentially stacked in the third direction will be described. However, the electrode assembly 200 is not limited to this form, and the electrode assembly 200 can be formed to have a form in which the first electrode 210, the separator 230, and the second electrodes 220 are stacked and wound around a winding axis C in a clockwise or counterclockwise direction.

The first electrode 210 may function as any one of a positive electrode and a negative electrode of the electrode assembly 200. Hereinafter, an example in which the first electrode 210 is the positive electrode of the electrode assembly 200 will be described. However, the first electrode 210 is not limited thereto, and the first electrode 210 may also function as the negative electrode of the electrode assembly 200.

The first electrode 210 according to the present embodiment may be formed to have the shape of a foil including a metal material such as aluminum or an aluminum alloy. A type, size, shape, or the like of the first electrode 210 is not particularly limited as long as the first electrode 210 has conductivity without causing a chemical change in the secondary battery. A cross-sectional shape of the first electrode 210 may be designed to be any of various shapes other than the rectangle illustrated in FIG. 4.

A plurality of first electrodes 210 may be included. The plurality of first electrodes 210 may be arranged in the third direction between the front surface portion 120 and the rear surface portion 130 of the case 100. The number of first electrodes 210 can be designed in various ways depending on a charging capacity of the secondary battery.

At least a portion of the first electrode 210 may be coated with a first active material layer 211. Both surfaces of the first electrode 210 may be coated with a first active material layer 211 or only one surface of the first electrode 210 may be coated with the first active material layer 211.

Since the first electrode 210 functions as a positive electrode in the present embodiment, the first active material layer 211 may include a positive electrode active material.

The positive electrode active material may be a compound capable of reversible lithium intercalation and deintercalation (a lithiated intercalation compound). More specifically, the positive electrode active material may be at least one of composite oxides of lithium and a metal selected from cobalt, manganese, nickel, iron, and combinations thereof.

For example, the positive electrode active material may include at least one of a lithium-iron-phosphorus oxide (LiFePO4, LFP), a lithium-manganese-iron-phosphorus oxide (LiMnFePO4, LMFP), and a lithium-nickel-cobalt-manganese oxide (LiNixCoyMnzO2, LCM). Here, 0 < x < 1, 0 < y < 1, 0 < z < 1, and x + y + z = 1 may be satisfied. The positive electrode active material may include only one of the lithium-iron-phosphorus oxide (LiFePO4, LFP), the lithium-manganese-iron-phosphorus oxide (LiMnFePO4, LMFP), and the lithium-nickel-cobalt-manganese oxide (LiNixCoyMnzO2, LCM), or may include two or all of the lithium-iron-phosphorus oxide (LiFePO4, LFP), the lithium-manganese-iron-phosphorus oxide (LiMnFePO4, LMFP), and the lithium-nickel-cobalt-manganese oxide (LiNixCoyMnzO2, LCM).

The first active material layer 211 may further include a positive electrode conductive material.

The positive electrode conductive material is used to impart conductivity to the first active material layer 211, and may be any material that does not cause a chemical change and is electronically conductive. Examples of the positive electrode conductive material may include carbon-based materials such as natural graphite, artificial graphite, carbon black, acetylene black, Ketjen black, carbon fiber, carbon nanofibers, and carbon nanotubes, metal-based materials in the form of a metal powder or metal fiber containing copper, nickel, aluminum, silver, or the like, conductive polymers such as polyphenylene derivatives, or mixtures thereof.

The first active material layer 211 may further include a positive electrode binder.

The positive electrode binder serves to firmly bind particles constituting a positive electrode active material to each other and also to firmly bind the positive electrode active material to the first electrode 210.

Examples of the positive electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

When the aqueous binder is used as the positive electrode binder, a cellulose-based compound capable of imparting viscosity may be further included. The cellulose-based compound may be a mixture of one or more kinds of carboxymethyl cellulose, hydroxypropyl methyl cellulose, methyl cellulose, an alkali metal salt thereof, and the like. The alkali metal may be Na, K, or Li.

The dry binder may be a polymer material capable of being fiberized and may be, for example, polytetrafluoroethylene, polyvinylidene fluoride, polyvinylidene fluoride-hexafluoropropylene copolymer, polyethylene oxide, or a combination thereof.

The first electrode 210 may include a first uncoated portion 212 that is not coated with the first active material layer 211. The first uncoated portion 212 according to the present embodiment may be disposed in an upper end region of the first electrode 210 disposed to face the opening portion 160 inside the case 100. However, the first uncoated portion 212 is not limited to this form and can be formed over an entire edge region of the first electrode 210.

The second electrode 220 may function as any one of a positive electrode and a negative electrode of the electrode assembly 200. Hereinafter, an example in which the second electrode 220 is the negative electrode of the electrode assembly 200 will be described. However, the second electrode 220 is not limited thereto, and the second electrode 220 can function as the positive electrode of the electrode assembly 200.

A plurality of second electrodes 220 may be included. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be spaced a predetermined distance from the first electrode 210 in the third direction.

The second electrode 220 according to the present embodiment may be formed to have the shape of a foil including a metal material such as copper, a copper alloy, nickel, or a nickel alloy. A type, size, shape, or the like of the second electrode 220 is not particularly limited as long as the second electrode 220 has conductivity without causing a chemical change in the secondary battery. A cross-sectional shape of the first electrode 210 may be designed to be any of various shapes in addition to the rectangular shape illustrated in FIG. 4.

At least a portion of the second electrode 220 may be coated with a second active material layer 221. Both surfaces of the second electrode 220 may be coated with the second active material layer 221, or only one surface of the second electrode 220 may be coated with the second active material layer 221.

Since the second electrode 220 functions as the negative electrode, the second active material layer 221 may include a negative electrode active material.

The negative electrode active material may include a material capable of reversible lithium-ion intercalation/deintercalation, lithium metal, an alloy of lithium metal, a material capable of lithium doping and de-doping, or a transition metal oxide.

The material capable of reversible lithium-ion intercalation/deintercalation may include a carbon-based negative electrode active material, such as crystalline carbon, amorphous carbon, or a combination thereof. Examples of the crystalline carbon may include graphite, such as natural graphite or artificial graphite in an amorphous, plate-like, flake-like, spherical, or fiber-like form, and examples of the amorphous carbon may include soft carbon or hard carbon, mesophase pitch carbides, and calcined coke.

The alloy of lithium metal may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of lithium doping and de-doping may be a Si-based negative electrode active material or a Sn-based negative electrode active material. The Si-based negative electrode active material may be silicon, a silicon-carbon composite, SiOx (0 < x < 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO2, a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include secondary particles (cores) obtained by assembling primary silicon particles, and amorphous carbon coating layers (shells) located on surfaces of the secondary particles. The amorphous carbon may also be located between the primary silicon particles, for example, so that the primary silicon particles may be coated with the amorphous carbon. The secondary particles may be dispersed and present in an amorphous carbon matrix.

The silicon-carbon composite may further include crystalline carbon. For example, the silicon-carbon composite may include cores including crystalline carbon and silicon particles, and amorphous carbon coating layers located on surfaces of the cores.

The Si-based negative electrode active material or the Sn-based negative electrode active material may be used in combination with the carbon-based negative electrode active material.

The second active material layer 221 may further include a negative electrode conductive material and a negative electrode binder.

The negative electrode conductive material is used to impart conductivity to the second active material layer 221, and can be any material that does not cause a chemical change and is electronically conductive. Examples of the negative electrode conductive material may include carbon-based materials such as natural graphite, artificial graphite, carbon black, acetylene black, Ketjen black, carbon fiber, carbon nanofibers, and carbon nanotubes, metal-based materials in the form of a metal powder or metal fiber containing copper, nickel, aluminum, silver, or the like, conductive polymers such as polyphenylene derivatives, or mixtures thereof.

The negative electrode binder serves to firmly bind the particles constituting the negative electrode active material to each other and also to firmly bind the negative electrode active material to the second electrode 220.

Examples of the negative electrode binder include a non-aqueous binder, an aqueous binder, a dry binder, and a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

When the aqueous binder is used as the negative electrode binder, a cellulose-based compound capable of imparting viscosity may be further included. The cellulose-based compound may be a mixture of one or more kinds of carboxymethyl cellulose, hydroxypropyl methyl cellulose, methyl cellulose, an alkali metal salt thereof, and the like. The alkali metal may be Na, K, or Li.

The dry binder may be a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 not coated with the second active material layer 221. The second uncoated portion 222 according to the present embodiment may be disposed in an upper end region of the second electrode 220 that is disposed to face the opening portion 160 inside the case 100. However, the second uncoated portion 222 is not limited to this form, and may be formed over an entire edge region of the second electrode 220.

The separator 230 may be disposed between the first electrode 210 and the second electrode 220. The separator 230 may perform a function of preventing a short circuit between the first electrode 210 and the second electrode 220 while allowing the movement of lithium ions between the first electrode 210 and the second electrode 220.

The separator 230 may be disposed to completely surround a surface region of the electrode assembly 200. Accordingly, the separator 230 can prevent the first electrode 210 and the second electrode 220 from being directly exposed to the outside of the electrode assembly 200.

The separator 230 may be made of polyethylene, polypropylene, polyvinylidene fluoride, or a multilayer film including two or more layers of these materials, and may be a mixed multilayer film such as a two-layer separator including polyethylene and polypropylene, a three-layer separator including polyethylene, polypropylene, and polyethylene, or a three-layer separator including polypropylene, polyethylene, and polypropylene.

The separator 230 may include a porous substrate, and a coating layer including an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of these materials.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof, but is not limited thereto.

The organic material and the inorganic material may be mixed and present in one coating layer, or may be present in a form in which a coating layer including the organic material and a coating layer including the inorganic material are stacked.

The first tab member 310 may be connected to the first electrode 210 and may protrude outward from the electrode assembly 200. Since the first electrode 210 is a positive electrode as an example, the first tab member 310 may function as a positive electrode tab of the secondary battery. However, the first tab member 310 is not limited thereto, and when the first electrode 210 is a negative electrode, the first tab member 310 may function as a negative electrode tab of the secondary battery.

The first tab member 310 according to the present embodiment may extend from the electrode assembly 200 in the first direction. That is, the first tab member 310 may extend toward the opening portion 160 inside the case 100.

The first tab members 310 according to the present embodiment may be formed as a pair.

In the present embodiment, a case in which the first tab members 310 are formed as a pair and extend in the first direction is illustrated, but the present invention is not limited thereto, and the first tab members 310 may extend in the second direction and may be connected to the first connection member 500 to be described below.

The first tab member 310 according to the present embodiment may have the shape of a foil extending from the first uncoated portion 212 of the first electrode 210 in the first direction. The first tab member 310 may have an approximately rectangular shape. However, the shape of the first tab member 310 is not limited thereto, and may be designed to be any of various shapes.

The first tab member 310 may be formed integrally with the first electrode 210. For example, the first tab member 310 may be a remaining region of the first uncoated portion 212 that remains after a portion of the first uncoated portion 212 is cut or removed by notching processing or the like. Alternatively, the first tab member 310 may be manufactured separately from the first electrode 210 and then connected to the first uncoated portion 212 by welding or the like. A material of the first tab member 310 may be the same as that of the first electrode 210.

A plurality of first tab members 310 may be included. The number of the first tab members 310 may be the same as the number of the first electrodes 210. The respective first tab members 310 may individually extend from the first uncoated portions 212 of the different first electrodes 210. The adjacent first tab members 310 may be disposed to face each other in the third direction. The adjacent first tab members 310 may be disposed parallel to each other. Accordingly, the first tab member 310 according to the present embodiment may be a set of a plurality of first tab members 310 stacked in the third direction. The adjacent first tab members 310 may be in contact with each other, and may also be spaced apart by a thickness of the separator 230.

The secondary battery according to the present embodiment may further include a second tab member 330.

The second tab member 330 may be connected to the second electrode 220 and may protrude outward from the electrode assembly 200. Since the second electrode 220 is a negative electrode as an example, the second tab member 330 may function as a negative electrode tab of the secondary battery. However, the second tab member 330 is not limited thereto, and when the second electrode 220 is a positive electrode, the second tab member 330 may function as a positive electrode tab of the secondary battery.

The second tab member 330 according to the present embodiment may extend from the electrode assembly 200 in the first direction. That is, the second tab member 330 may extend toward the opening portion 160 inside the case 100.

The first tab member 310 and the second tab member 330 may be disposed apart from each other in the second direction. For example, the second tab member 330 may be disposed a predetermined distance from the first tab member 310 in the second direction.

The second tab members 330 according to the present embodiment may be formed as a pair.

In the present embodiment, a case in which the second tab members 330 are formed as a pair and extend in the first direction is illustrated, but the present invention is not limited thereto, and the second tab members 330 may extend in the second direction and may be connected to the second connection member 600 to be described below.

The second tab member 330 according to the present embodiment may have the shape of a foil extending from the second uncoated portion 222 of the second electrode 220 in the first direction. The second tab member 330 may have an approximately rectangular shape. However, the shape of the second tab member 330 is not limited thereto, and may be designed to be any of various shapes.

The second tab member 330 may be formed integrally with the second electrode 220. For example, the second tab member 330 may be a remaining region of the second uncoated portion 222 that remains after a portion of the second uncoated portion 222 is cut or removed by notching processing or the like. Alternatively, the second tab member 330 may be manufactured separately from the second electrode 220 and then connected to the second uncoated portion 222 by welding or the like. A material of the second tab member 330 may be the same as a material of the second electrode 220.

A plurality of second tab members 330 may be included. The number of the second tab members 330 may be the same as the number of the second electrodes 220. The respective second tab members 330 may individually extend from the second uncoated portions 222 of the different second electrodes 220. The adjacent second tab members 330 may be disposed to face each other in the third direction. The adjacent second tab members 330 may be disposed parallel to each other. Accordingly, the second tab member 330 according to the present embodiment may be a set of a plurality of second tab members 330 stacked in the third direction. The adjacent second tab members 330 may be in contact with each other, and may also be spaced apart by the thickness of the separator 230.

The cap assembly 400 may be coupled to the case 100 to seal the case 100. The cap assembly 400 may be disposed to face the electrode assembly 200 in the first direction.

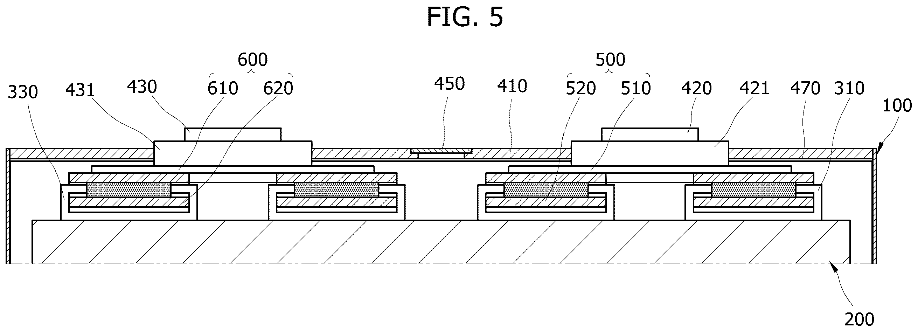

FIG. 5 is an enlarged view schematically illustrating a configuration of the cap assembly according to an embodiment of the present invention.

Referring to FIGS. 1 to 5, the cap assembly 400 according to the present embodiment may include a cap plate 410, a first terminal 420, and a second terminal 430.

The cap plate 410 forms a rough exterior of the cap assembly 400 and may support the first terminal 420 and the second terminal 430 as a whole.

The cap plate 410 according to the present embodiment may be formed to have the shape of a flat plate. The cap plate 410 may be disposed in the opening portion 160 of the case 100. The cap plate 410 may be disposed to face the electrode assembly 200 in the first direction. That is, the cap plate 410 may be disposed a predetermined distance from the electrode assembly 200 in the first direction. The cap plate 410 may be disposed parallel to the bottom portion 110 of the case 100.

The cap plate 410 may be seated on an upper end of the case 100, more specifically, on the upper ends of the front surface portion 120, the rear surface portion 130, the first side portion 140, and the second side portion 150. The cap plate 410 can be coupled to the case 100 by using various types of coupling schemes such as welding, bolting, and fitting.

The first terminal 420 may protrude outward from the cap plate 410. The first terminal 420 may be electrically connected to the first electrode 210. Since the first electrode 210 according to the present embodiment functions as a positive electrode, the first terminal 420 may be, for example, a positive terminal of the secondary battery.

The first terminal 420 according to the present embodiment may be inserted into the cap plate 410. An upper end of the first terminal 420 may protrude from the cap plate 410 in the first direction. In FIG. 2, an example in which the first terminal 420 has a quadrilateral cross-sectional shape is illustrated, but the cross-sectional shape of the first terminal 420 is not limited thereto, and can be designed to be any of various shapes such as a circle, oval, and polygon. The first terminal 420 may be formed of an electrically conductive material such as aluminum, nickel, or copper.

A first terminal axis passing through a center of the first terminal 420 in the first direction may be disposed between a pair of first tab members.

A first gasket 421 may be installed between the cap plate 410 and the first terminal 420. The first gasket 421 may electrically insulate the cap plate 410 from the first terminal 420 and prevent moisture or foreign substances from entering a space between the cap plate 410 and the first terminal 420.

The first gasket 421 according to the present embodiment may be formed of an insulating material such as polyethylene (PE), polypropylene (PP), or polyethylene terephthalate (PET) rubber. The first gasket 421 may be fixed between the cap plate 410 and the first terminal 420 by press fitting, injection molding, bonding, or the like.

The second terminal 430 may protrude outward from the cap plate 410 at a position spaced apart from the first terminal 420. The second terminal 430 may be electrically connected to the second electrode 220. Since the second electrode 220 according to the present embodiment functions as a negative electrode, the second terminal 430 may be, for example, a negative terminal of the secondary battery.

The second terminal 430 according to the present embodiment may be inserted into the cap plate 410. An upper end of the second terminal 430 may protrude from the cap plate 410 in the first direction. In FIG. 2, an example in which the second terminal 430 has a quadrilateral cross-sectional shape is illustrated, but the cross-sectional shape of the second terminal 430 is not limited thereto, and may be designed to be any of various shapes such as a circle, an oval, and a polygon. The second terminal 430 may be formed of an electrically conductive material such as aluminum, nickel, or copper.

The second terminal 430 may be disposed a predetermined distance from the first terminal 420 in the second direction. A second terminal shaft passing through a center of the second terminal 430 in the first direction may be disposed between a pair of second tab members.

A second gasket 431 may be installed between the cap plate 410 and the second terminal 430. The second gasket 431 may electrically insulate the cap plate 410 from the second terminal 430 and prevent moisture or foreign substances from entering a space between the cap plate 410 and the second terminal 430.

The second gasket 431 according to the present embodiment may be formed of an insulating material such as polyethylene (PE), polypropylene (PP), or polyethylene terephthalate (PET) rubber. The second gasket 431 may be fixed between the cap plate 410 and the first terminal 420 by press fitting, injection molding, bonding, or the like.

The cap assembly 400 according to the present embodiment may further include a vent hole 440 and a vent 450.

The vent hole 440 according to the present embodiment may be formed to have the shape of a hole that vertically passes through both sides of the cap plate 410 in the first direction. The vent hole 440 may function as a component that provides a path along which flame, gas, smoke, or the like inside the case 100 is discharged to the outside of the case 100 when the secondary battery thermally runs away due to an overcurrent or the like. The vent hole 440 may be disposed between the first terminal 420 and the second terminal 430. A cross-sectional shape of the vent hole 440 may be designed to be any of various shapes such as an oval, circle, or polygon.

The vent 450 may be installed in the vent hole 440 and may be opened and closed according to a change in internal pressure of the case 100. That is, the vent 450 may close the vent hole 440 during normal operation of the secondary battery to prevent electrolyte or the like inside the case 100 from leaking to the outside of the case 100 or moisture, foreign substances, or the like from entering the case 100. The vent 450 may open the vent hole 440 at the time of thermal runaway of the secondary battery to induce flame, gas, smoke, or the like inside the case 100 to be discharged to the outside of the case 100.

The vent 450 according to the present embodiment may be formed in approximately a plate-like shape. The vent 450 may be fixed to the cap plate 410 by any of various types of coupling schemes such as welding, bolting, and fitting. The vent 450 may be disposed inside the vent hole 440 or may be disposed to face the vent hole 440 in the first direction on the upper or lower side of the cap plate 410.

A thickness of the vent 450 parallel to the first direction may be smaller than that of the cap plate 410. Accordingly, the vent 450 may be easily ruptured or broken when the internal pressure of the case 100 increases. The vent 450 may include a notch formed to be concave toward the inner side of the vent 450 so that the vent 450 can be preferentially broken when the internal pressure of the case 100 increases.

The cap assembly 400 according to the present embodiment may further include an electrolyte injection port 460 which is formed to pass through the cap plate 410 and in which a sealing plug may be installed. The electrolyte injection port 460 may be disposed at a predetermined interval in the second direction or in a direction opposite to the second direction from the vent hole 440. The electrolyte injection port 460 may be disposed between the first terminal 420 and the second terminal 430.

The cap assembly 400 according to the present embodiment may further include an insulating plate 470.

The insulating plate 470 may be disposed between the cap plate 410 and the electrode assembly 200. The insulating plate 470 may prevent the cap plate 410 and the electrode assembly 200 from coming into direct contact with each other to insulate the cap plate 410 from the electrode assembly 200. The insulating plate 470 may fix a position of the electrode assembly 200 inside the case 100. The insulating plate 470 can prevent the electrode assembly 200 from being damaged when the cap plate 410 is deformed toward the inside of the case 100 due to external impact or the like.

The insulating plate 470 according to the present embodiment may be disposed to face the electrode assembly 200 in the first direction inside the case 100. That is, the electrode assembly 200, the insulating plate 470, and the cap plate 410 may be disposed sequentially in the first direction. The insulating plate 470 may be fixed to an inner surface of the case 100 by using any of various types of coupling schemes such as fitting, welding, bolting, and bonding. The insulating plate 470 may be in contact with one surface of the electrode assembly 200 from which the first tab member 310 and the second tab member 330 extend. The insulating plate 470 may be formed of an insulating material such as polyethylene (PE), polypropylene (PP), or polyethylene terephthalate (PET) rubber.

The first connection member 500 may be disposed between the electrode assembly and the cap assembly 400. The first connection member 500 may be connected to the first terminal 420 and the first tab member 310.

The first connection member 500 may extend in the third direction so that the first connection member 500 is inserted in the third direction into the first connection hole 312 of the first tab member 310 to be stacked. As illustrated in FIG. 2, the first connection member 500 may function as a configuration that electrically connects the first terminal 420 to the first tab member 310.

The first connection member 500 may be formed of a conductive material. The first connection member 500 may be formed of the same material as the first terminal 420.

The first connection member 500 may include a first current collector 510 and a first current collection plate 520. That is, the first current collector 510 may be connected to the first terminal 420, and the first current collection plate 520 may be inserted into and connected to the first connection hole 312 of the first tab member 310.

The first current collection plate 520 may include a first portion 522 disposed on one side with respect to a center of the first connection member 500 and electrically connected to the first terminal 420, and a second portion 524 disposed on the other side with respect to the center of the first connection member 500 and inserted into the first connection hole 312.

The first current collection plate 520 may be bent with respect to the center of the first current collection plate 520 so that the first portion 522 may be folded over the second portion 524.

The second connection member 600 may be disposed between the electrode assembly and the cap assembly 400. The second connection member 600 may be connected to the second terminal 430 and the second tab member 330.

The second connection member 600 may extend in the third direction so that the second connection member 600 can be inserted in the third direction into the second connection hole 332 of the second tab member 330 to be stacked. As illustrated in FIG. 2, the second connection member 600 may function as a configuration that electrically connects the second terminal 430 to the second tab member 330.

The second connection member 600 may be formed of a conductive material. The second connection member 600 may be formed of the same material as the second terminal 430.

The second connection member 600 may include a second current collector 610 and a second current collection plate 620. That is, the second current collector 610 may be connected to the second terminal 430, and the second current collection plate 620 may be inserted into and connected to the second connection hole 332 of the second tab member 330.

Since the shape of the second current collection plate 620 is the same as that of the first current collection plate 520, detailed description thereof will be omitted.

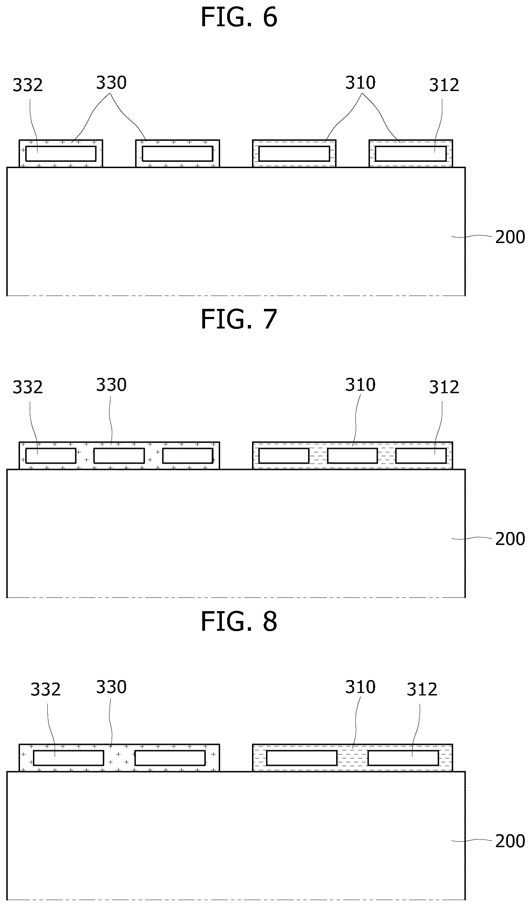

FIG. 6 is a front view schematically illustrating the tab member of the electrode assembly according to the first embodiment of the present invention.

The first connection hole 312 into which the first connection member 500 can be inserted may be formed in the first tab member 310. The first connection hole 312 may be formed in a quadrilateral or circular shape.

Further, the second connection hole 332 into which the second connection member 600 can be inserted may be formed in the second tab member 330. The second connection hole 332 may be formed in a quadrilateral or circular shape like the first connection hole 312.

The first tab members 310 and the second tab members 330 may be formed as a pair, the first current collection plate 520 may branch and extend as a pair to be inserted into the first connection holes 312 of the first tab members 310, and the second current collection plate 620 may branch and extend as a pair to be inserted into the second connection holes 332 of the second tab members 330.

The first tab member 310 and the second tab member 330 may be formed in any of various shapes. This can increase sizes of the first tab member 310 and the second tab member 330 and can improve the heat generation performance.

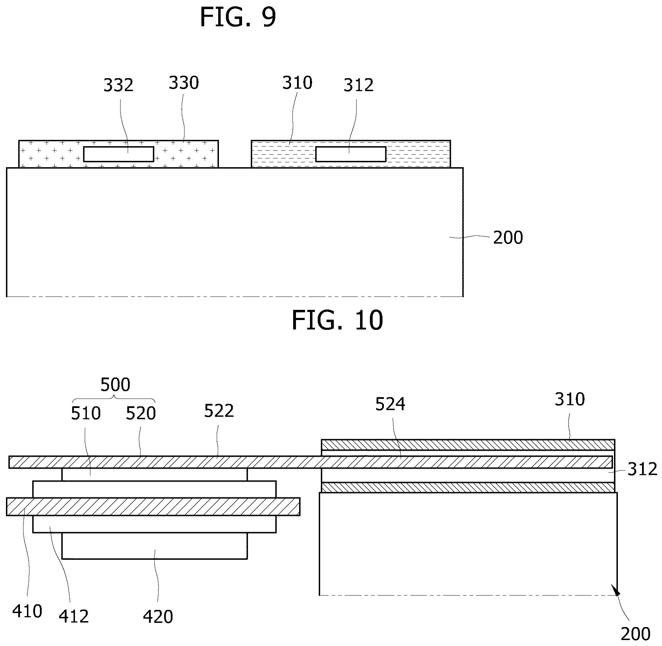

FIG. 7 illustrates a first modified example schematically showing the tab member according to the first embodiment of the present invention, FIG. 8 illustrates a second modified example schematically showing the tab member according to the first embodiment of the present invention, and FIG. 9 illustrates a third modified example schematically showing the tab member according to the first embodiment of the present invention.

Referring to FIGS. 7 to 9, the first tab member 310 may be formed as a single member, one or more first connection holes 312 may be formed in the first tab member 310, the second tab member 330 may be formed as a single member, and one or more second connection holes 332 may be formed in the second tab member 330.

This can increase sizes of the first tab member 310 and the second tab member 330, thereby reducing resistance and improving heat dissipation performance. In this case, the first current collection plate 520 and the second current collection plate 620 may be formed to branch into a plurality of pieces corresponding to the number of first connection holes 312 or second connection holes 332 formed in the first tab member 310 or the second tab member 330.

FIG. 10 is a diagram illustrating the connection between the first connection member 500 and the first tab member 310 according to the first embodiment of the present invention.

Referring to FIG. 10, the first connection member 500 according to the present embodiment may be inserted into the first connection hole 312 of the first tab member 310. An upper portion of the first tab member 310 may be welded in the state illustrated in FIG. 10 to electrically connect the first tab member 310 to the first connection member 500.

The connection between the first connection member 500 and the first tab member 310 may be firmly made in various ways.

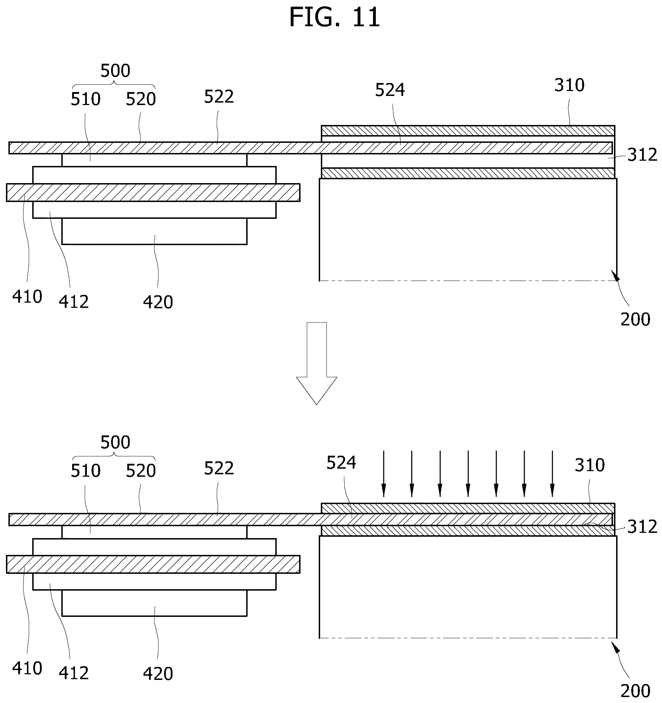

FIG. 11 illustrates a first modified example showing the connection between the first connection member 500 and the first tab member 310 according to the first embodiment of the present invention.

Referring to FIG. 11, the first connection member 500 and the first tab member 310 according to the present embodiment may be more firmly connected by the compaction of the first tab member 310.

That is, the first tab member 310 is compacted in a state in which the first connection member 500 is inserted into the first connection hole 312 of the first tab member 310, thereby firmly coupling the first tab member 310 and the first connection member 500, and the upper portion of the first tab member 310 may be welded to electrically connect the first tab member 310 to the first connection member 500 in a state in which compaction is complete.

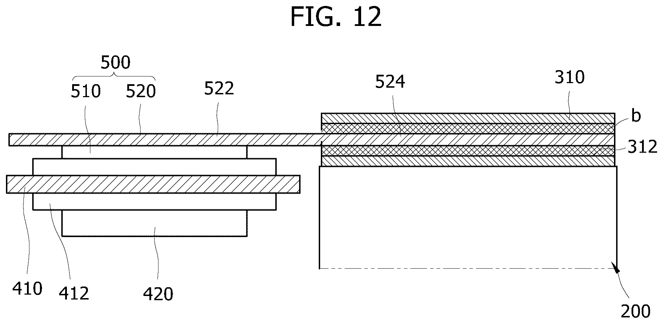

FIG. 12 is a second modified example showing the connection between the first connection member 500 and the first tab member 310 according to the first embodiment of the present invention.

Referring to FIG. 12, in a state in which the first connection member 500 according to the present embodiment is inserted into the first connection hole 312 of the first tab member 310, the first connection hole 312 is filled with a conductive bond b so that the first connection member 500 can be firmly coupled. Thus, the first tab member 310 and the first connection member 500 may be fixed due to the filling with the conductive bond b, and the upper portion of the first tab member 310 is welded to electrically connect the first tab member 310 to the first connection member 500.

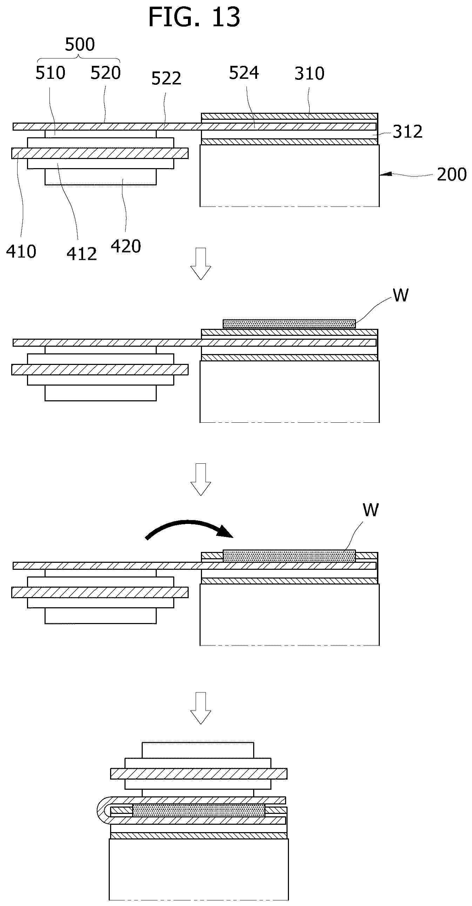

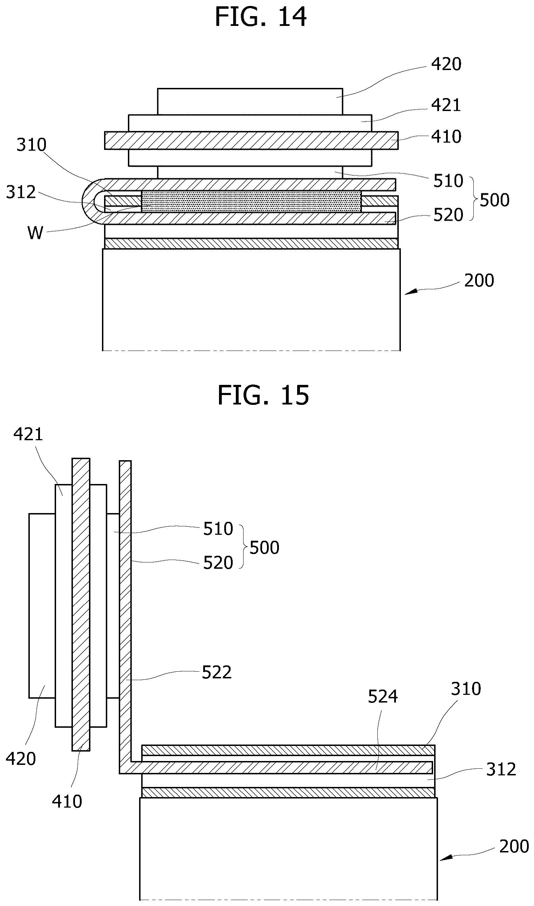

FIG. 13 is a diagram schematically illustrating a process of forming the secondary battery according to the first embodiment of the present invention, and FIG. 14 is a diagram schematically illustrating a completed state of the secondary battery according to the first embodiment of the present invention.

Referring to FIGS. 1 to 14, the cap assembly 400 is supplied in a flipped state, the first connection member 500 included in the cap assembly 400 is inserted into the first connection hole 312 of the first tab member 310, the first tab member 310 and the first connection member 500 are electrically connected to each other by welding, and the first current collection plate 520 is bent around the center and folded to wrap around the first tab member 310, so that the cap assembly 400 can be positioned over the electrode assembly. Thus, the cap assembly 400 and the electrode assembly 200 are modularized, and the modularized cap assembly 400 and electrode assembly 200 are inserted into the case 100 so that the secondary battery can be formed.

Since the connection between the second connection member 600 and the second tab member 330 is the same as the connection between the first connection member 500 and the first tab member 310, the connection between the first connection member 500 and the first tab member 310 will be described instead.

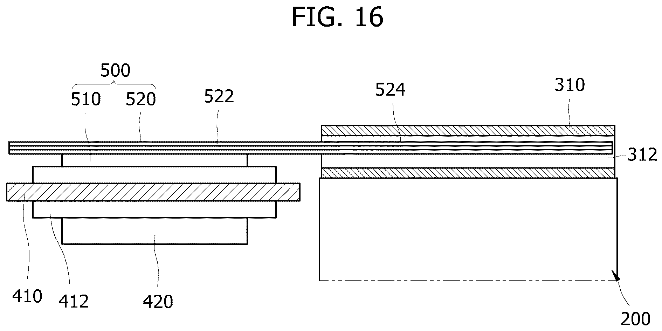

FIG. 15 illustrates a first modified example schematically showing the first connection member 500 according to the first embodiment of the present invention, and FIG. 16 is a second modified example schematically showing the first connection member 500 according to the first embodiment of the present invention.

Referring to FIG. 15, in the first current collection plate 520 of the first connection member 500 according to the present embodiment, the first portion 522 may be bent in a vertical direction from the second portion 524 with respect to the center.

This can facilitate a task of bending the first current collection plate 520 since the first portion 522 of the first connection member 500 has already been bent from the second portion 524, and can reduce an error at bending position because the first portion 522 has already been bent.

Referring to FIG. 16, the first connection member 500 according to the present embodiment may be configured of a plurality of thin tabs. When the first current collection plate 520 is formed with a large thickness, cracks may occur and sufficient bending may be achieved, and since the first connection member 500 is configured of the plurality of thin tabs, the bending task can be facilitated.

Hereinafter, the secondary battery according to the second embodiment of the present invention will be described.

The secondary battery according to the present embodiment may be configured differently only in a connection structure between the first connection member 500 and the first tab member 310 according to the first embodiment of the present invention.

Accordingly, only the connection structure between the first connection member 500 and the first tab member 310, which is different from that in the secondary battery according to the first embodiment of the present invention, will be described when the secondary battery according to the present embodiment is described.

The description of the secondary battery according to the first embodiment of the present invention may be applied as it is to a remaining configuration of the secondary battery according to the present embodiment.

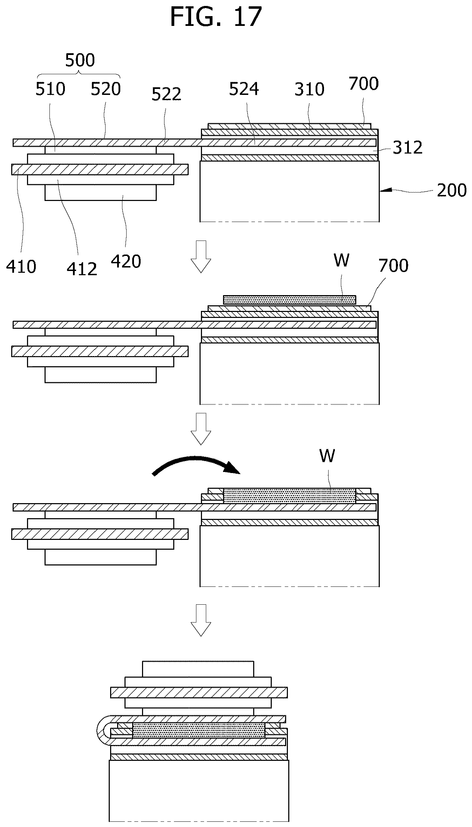

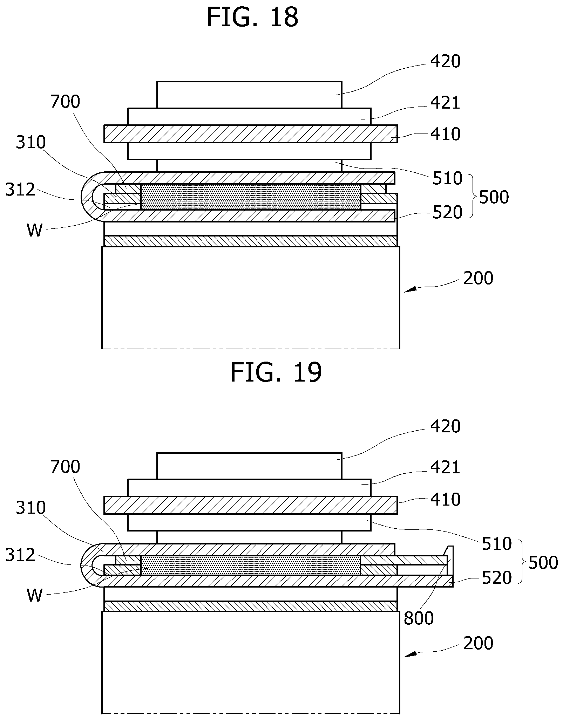

FIG. 17 is a diagram schematically illustrating a process of forming the secondary battery according to the second embodiment of the present invention, and FIG. 18 is a diagram schematically illustrating a completed state of the secondary battery according to the second embodiment of the present invention.

Referring to FIGS. 17 and 18, an auxiliary tab 700 for reinforcing the rigidity of the welding portion may be further included on the first tab member 310 according to the present embodiment.

The auxiliary tab 700 may be formed in the shape of a flat plate, thereby improving the rigidity of the welding portion. More specifically, the first tab member 310 forms a narrow welding portion due to the first connection hole 312, and is welded together with the auxiliary tab 700, thereby preventing welding quality from deteriorating.

Referring to FIG. 17, the cap assembly 400 is supplied in a flipped state, the first connection member 500 included in the cap assembly 400 is inserted into the first connection hole 312 of the first tab member 310, and the auxiliary tab 700 is stacked on the first tab member 310 in a state in which the first tab member 310 is inserted into the first connection hole 312. Thereafter, the auxiliary tab 700, the first tab member 310, and the first connection member 500 may be electrically connected to each other by welding performed on an upper surface of the auxiliary tab 700. The first current collection plate 520 is bent around the center and folded to wrap around the first tab member 310, so that the cap assembly 400 can be positioned over the electrode assembly 200. Thus, the cap assembly 400 and the electrode assembly 200 are modularized, and the modularized cap assembly 400 and electrode assembly 200 are inserted into the case 100 so that the secondary battery can be formed.

Since the connection between the second connection member 600 and the second tab member 330 is the same as the connection between the first connection member 500 and the first tab member 310, the connection between the first connection member 500 and the first tab member 310 will be described instead.

FIG. 19 illustrates a modified example showing the connection between the first connection member 500 and the first tab member 310 according to the second embodiment of the present invention.

Referring to FIG. 19, in the present embodiment, a withdrawal prevention portion 800 that prevents the first connection member 500 from being withdrawn from the first connection hole 312 may be included.

The withdrawal prevention portion 800 may include a hook that is formed at an end of the first connection member 500 and engaged with the auxiliary tab 700. That is, the hook is formed at the end of the first connection member 500 inserted into the first connection hole 312, and the auxiliary tab 700 stacked on the first tab member 310 is coupled with the hook, thereby preventing the first connection member 500 from being withdrawn from the first connection hole 312.

Although not shown, a through hole with which the hook, which is the withdrawal prevention portion 800, is engaged may be formed in the auxiliary tab 700.

Hereinafter, a secondary battery according to a third embodiment of the present invention will be described.

The secondary battery according to the present embodiment may be configured differently only in a connection structure between the first connection member 500 and the first tab member 310 according to the first embodiment of the present invention.

Accordingly, only the connection structure between the first connection member 500 and the first tab member 310, which is different from that in the secondary battery according to the first embodiment of the present invention, will be described when the secondary battery according to the present embodiment is described.

The description of the secondary battery according to the first embodiment of the present invention may be applied as it is to a remaining configuration of the secondary battery according to the present embodiment.

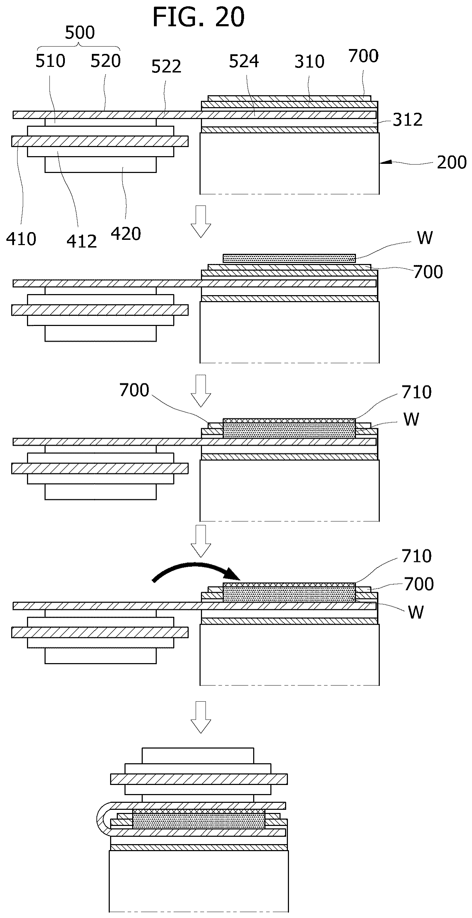

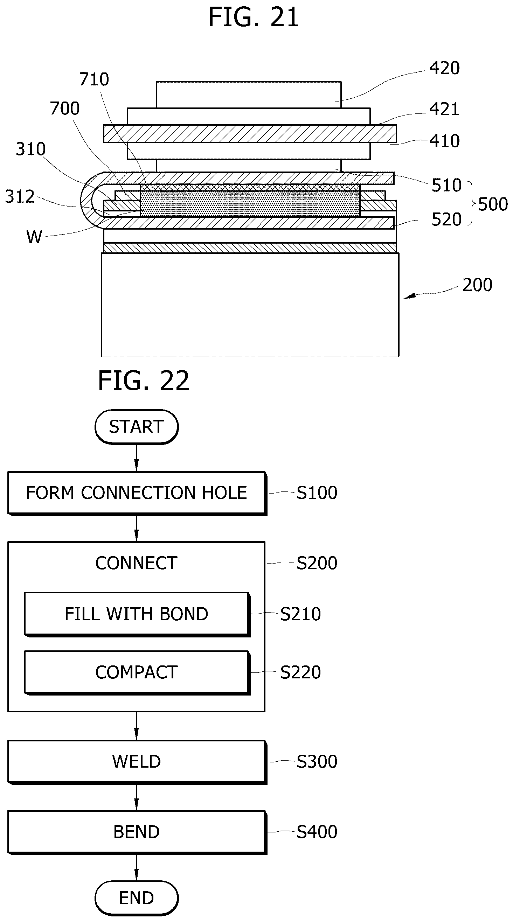

FIG. 20 is a diagram schematically illustrating a process of forming the secondary battery according to the third embodiment of the present invention, and FIG. 21 is a diagram schematically illustrating a completed state of the secondary battery according to the third embodiment of the present invention.

Referring to FIGS. 20 and 21, the auxiliary tab 700 for reinforcing the rigidity of the welding portion is included on the first tab member 310 according to the present embodiment, and an upper surface of the auxiliary tab 700 is coated with a conductive bond so that an adhesive portion 710 can be formed.

The auxiliary tab 700 may be formed in the shape of a flat plate, thereby improving the rigidity of the welding portion. Further, the adhesive portion 710 made of the conductive bond is formed on the upper surface of the auxiliary tab 700, thereby reinforcing the electrical connection when the first connection member 500 is stacked by bending.

The conductive bond is an adhesive that can transfer electricity or heat, and may include conductive particles such as silver (Ag), copper (Cu), carbon (C), and graphene. In other words, the conductive bond can maintain electrical and thermal conductivity while having an adhesive capability.

Referring to FIG. 20, the cap assembly 400 is supplied in a flipped state, the first connection member 500 included in the cap assembly 400 is inserted into the first connection hole 312 of the first tab member 310, and the auxiliary tab 700 is stacked on the first tab member 310 in a state in which the first tab member 310 inserted into the first connection hole 312. Thereafter, the auxiliary tab 700, the first tab member 310, and the first connection member 500 may be electrically connected to each other by welding performed on an upper surface of the auxiliary tab 700. After the upper surface of the auxiliary tab 700 is coated with a conductive bond so that the adhesive portion 710 is formed, the first current collection plate 520 is bent around the center and folded to wrap around the first tab member 310, so that the cap assembly 400 can be positioned over the electrode assembly 200. Thus, the cap assembly 400 and the electrode assembly 200 are modularized, and the modularized cap assembly 400 and the electrode assembly 200 are inserted into the case 100 so that the secondary battery can be formed.

Since the connection between the second connection member 600 and the second tab member 330 is the same as the connection between the first connection member 500 and the first tab member 310, the connection between the first connection member 500 and the first tab member 310 will be described instead.

Hereinafter, a method of manufacturing a secondary battery according to an embodiment of the present invention will be described.

FIG. 22 is a flowchart illustrating a method of manufacturing a secondary battery according to an embodiment of the present invention.

Referring to FIGS. 1 to 22, the method of manufacturing a secondary battery includes a connection hole forming operation S100, a connection operation S200, a welding operation S300, and a bending operation S400.

The connection hole forming operation S100 is an operation of forming the connection hole in the tab member extending from the electrode assembly 200, in which the first connection hole 312 is formed in the first tab member 310 and the second connection hole 332 is formed in the second tab member 330.

The first connection hole 312 and the second connection hole 332 may be formed through a notching process for forming the first tab member 310 and the second tab member 330.

The first tab member 310 formed on the first electrode 210 and the second tab member 330 formed on the second electrode 220 are stacked when the first electrode 210 and the second electrode 220 are stacked, so that the electrode assembly 200 can be formed.

The connection operation S200 is an operation of inserting the connection members connected to the terminals of the cap assembly 400 into the connection holes, in which the first connection member 500 can be connected through the first connection hole 312 of the first tab member 310, and the second connection member 600 can be connected through the second connection hole 332 of the second tab member 330.

More specifically, the first current collection plate 520 of the first connection member 500 may be inserted into the first connection hole 312, and the second current collection plate 620 of the second connection member 600 may be inserted into the second connection hole 332.

In this case, the connection operation S200 may further include a bond filling operation S210 in which the first connection hole 312 and the second connection hole 332 are filled with the conductive bond b in a state in which the first current collection plate 520 is inserted into the first connection hole 312 and the second current collection plate 620 is inserted into the second connection hole 332.

The connection operation S200 may further include a compaction operation S220 in which the tab member is compacted in a state in which the connection member is inserted into the connection hole. More specifically, the first tab member 310 and the second tab member 330 may be compacted so that the connection can be firmly made in a state in which the first current collection plate 520 is inserted into the first connection hole 312 and the second current collection plate 620 is inserted into the second connection hole 332.

In the present embodiment, the bond filling operation S210 and the compaction operation S220 may be omitted, or only one of the bond filling operation S210 and the compaction operation S220 may be selectively performed.

The welding operation S300 is an operation of electrically connecting the terminal to the tab member by welding the connection member and the tab member in a state in which the connection member is inserted into the connection hole, and more specifically, the first tab member 310 and the first connection member 500, and the second tab member 330 and the second connection member 600 may be electrically connected.

In this case, the auxiliary tab 700 may be included to improve the rigidity of the welding portion. That is, after the auxiliary tab 700 is stacked on the first tab member 310 and the second tab member 330, an upper side of the auxiliary tab 700 may be welded to electrically connect the auxiliary tab 700, the first tab member 310, and the first connection member 500, and electrically connect the auxiliary tab 700, the second tab member 330, and the second connection member 600.

In the present embodiment, with the auxiliary tab 700, it is possible to prevent welding quality from deteriorating, and direct welding may be performed on the upper side of the tab member without the auxiliary tab 700.

After the welding operation S300, the upper surface of the auxiliary tab 700 is coated with the conductive bond so that the adhesive portion 710 is formed.

The adhesive portion 710 can improve the reliability of the electrical connection between the first tab member 310 and the first connection member 500 and between the second tab member 330 and the second connection member 600 when the bending operation S400 to be described below is performed.

The bending operation S400 is an operation of bending the center of the connection member so that the cap assembly 400 is positioned over the tab member, in which the first portion 522 bent with respect to the center of the tab member and connected to the terminal can be folded over the second portion 524 inserted into the connection hole.

More specifically, the first current collection plate 520 and the second current collection plate 620 are bent around the center and folded to wrap around the first tab member 310 and the second tab member 330, so that the cap assembly 400 can be positioned over the electrode assembly 200. Thus, the cap assembly 400 and the electrode assembly are modularized, and the modularized cap assembly 400 and electrode assembly 200 are inserted into the case 100, so that a secondary battery can be formed.

According to the aspect of the present invention, it is possible to manufacture the secondary battery by only bending the connection member after welding, so that assembling efficiency can be improved.

According to the aspect of the present invention, it is possible to increase a size of the tab member, and to weld all tab members to the connection member, for improved heat dissipation performance due to reduced resistance.

However, the effects obtainable through the present invention are not limited to the above effects, and other technical effects that are not mentioned will be clearly understood by those skilled in the art from the following description of the present invention.

While the present invention has been described with reference to embodiments shown in the drawings, these embodiments are merely illustrative and it should be understood that various modifications and equivalent other embodiments can be derived by those skilled in the art on the basis of the embodiments.

Therefore, the technical scope of the present invention should be defined by the appended claims.

## Claims

1. A secondary battery comprising:
a case (100);
an electrode assembly (200) disposed inside the case (100) and including a first electrode (210) and a second electrode (220);
a first tab member (310) connected to the first electrode (210) and extending from the electrode assembly (200);
a cap assembly (400) disposed to face the electrode assembly (200) and including a first terminal (420) and a second terminal (430);
a first connection member (500) configured to electrically connect the first terminal (420) of the cap assembly (400) to the first tab member (310); and
a first connection hole (312) formed in the first tab member (310) so that the first connection member (500) is inserted into the first connection hole (312).

2. The secondary battery as claimed in claim 1, wherein the first tab members (310) are disposed as a pair to be spaced apart from each other on one side with respect to a center of the first electrode (210).

3. The secondary battery as claimed in claim 1 or 2, wherein
the first tab member (310) is formed on one side with respect to a center of the first electrode (210), and
a plurality of first connection holes (312) are formed in the first tab member (310).

4. The secondary battery as claimed in any of the preceding claims, wherein
the first connection member (500) includes
a first portion disposed on one side with respect to a center of the first connection member (500) and electrically connected to the first terminal (420); and
a second portion disposed on the other side with respect to the center of the first connection member (500) and inserted into the first connection hole (312), and
the first connection member (500) is bent with respect to the center of the first connection member (500) so that the first portion is folded over the second portion.

5. The secondary battery as claimed in claim 4, wherein the second portion is welded to the first tab member (310) in a state in which the second portion is inserted into the first connection hole (312).

6. The secondary battery as claimed in claim 4 or 5, wherein the first tab member (310) is compacted in a state in which the second portion is inserted into the first connection hole (312).

7. The secondary battery as claimed in any of the claims 4 to 6, wherein the first connection hole (312) is filled with a conductive bond in a state in which the second portion is inserted into the first connection hole (312).

8. The secondary battery as claimed in any of the claims 4 to 7, wherein the first portion is formed to be bent in a vertical direction from the second portion.

9. The secondary battery as claimed in any of the claims 4 to 8, further comprising an auxiliary tab (700) on the first tab member (310) to reinforce the rigidity of a welding portion.

10. The secondary battery as claimed in claim 9, wherein an upper surface of the auxiliary tab (700) is coated with a conductive bond.

11. The secondary battery as claimed in claim 9 or 10, further comprising a withdrawal prevention portion (800) configured to prevent the first connection member (500) from being withdrawn from the first connection hole (312).

12. The secondary battery as claimed in claim 11, wherein the withdrawal prevention portion (800) is a hook formed at an end of the first connection member (500) and engaged with the auxiliary tab (700).

13. The secondary battery as claimed in any of the preceding claims,
wherein the first connection member (500) includes a plurality of thin tabs.

14. The secondary battery as claimed in any of the preceding claims, comprising:
a second tab member (330) connected to the second electrode (220) and spaced apart from the first tab member (310);
a second connection member (600) electrically connecting the second terminal (430) of the cap assembly (400) to the second tab member (330); and
a second connection hole (332) formed in the second tab member (330) so that the second connection member (600) is inserted into the second connection hole (332).

15. A method of manufacturing a secondary battery, comprising:
a connection hole forming operation of forming a connection hole (312, 332) in a tab member (310, 330) extending from an electrode assembly (200);
a connection operation of inserting a connection member (500, 600) connected to a terminal (420, 430) of a cap assembly (400) into the connection hole (312, 332);
a welding operation of welding the connection member (500, 600) and the tab member (310, 330) to electrically connect the terminal (420, 430) to the tab member (310, 330) in a state in which the connection member (500, 600) is inserted into the connection hole (312, 332); and
a bending operation of bending a center of the connection member (500, 600) so that the cap assembly (400) is positioned above the tab member (310, 330).
